# EUROPEAN PATENT APPLICATION

(11) **EP 4 369 591 A1**
(43) Date of publication of application: **15.05.2024**
(21) Application number: 23207903.8
(22) Date of filing: 06.11.2023
(51) Int. Cl.: H02P 25/14, H02P 25/16

(54) **ELECTROMECHANICAL CIRCUIT AND METHOD FOR CONTROLLING A UNIVERSAL ELECTRIC MOTOR**

(30) Priority: 09.11.2022 IT 202200023085
(71) Applicant: Project e Motors S.A., 6900 Lugano, Ticino (CH)
(72) Inventor: Moscatelli, Emilio, 21030 Cugliate Fabiasco (IT)
(74) Representative: Modiano, Gabriella Diana

(57) **Abstract**

An electromechanical circuit (10) for controlling a universal electric motor, comprising:
a battery (12), of the rechargeable type, configured to supply the electromechanical circuit (10) with a battery voltage (V12);
a primary capacitor (14) having a maximum operating voltage greater than the battery voltage (V12) and configured to operate in a first operating mode, in which the primary capacitor (14) stores electrical energy, and a second operating mode, in which the primary capacitor (14) supplies the electrical energy to the battery (12);
a diode (16) interposed between the battery (12) and the primary capacitor (14) along a first branch (R1) of the electromechanical circuit (10) and configured to hinder a flow of electric current from the primary capacitor (14) to the battery (12) along the first branch (R1);
a winding (18) associable with the universal electric motor and interposed between the battery (12) and the primary capacitor (14) along a second branch (R2) of the electromechanical circuit (10); and
a control assembly (20) electrically connected to the winding (18), to the primary capacitor (14) and to the battery (12), and configured to perform the following operations:
a. prevent a circulation of electric current from the battery (12) to the winding (18) through the control assembly (20);
b. prevent a transit of electric current between the battery (12) and the primary capacitor (14) through the control assembly (20);
c. provide the circulation of electric current, while at the same time continuing to prevent the transit of electric current;
d. interrupt the circulation of electric current, while continuing at the same time to prevent the transit of electric current, so as to activate the first operating mode of the primary capacitor (14);
e. provide the transit of electric current, so as to activate the second operating mode of the primary capacitor (14), while continuing at the same time to prevent the circulation of electric current.

## Description

The present invention relates to an electromechanical circuit and a method for controlling a universal electric motor.

In the technical field of electric motors, there is a machine capable of operating both with a direct current supply and with an alternating current supply. This machine is known as "universal electric motor" or, more simply, as "universal motor".

The universal electric motor operates on the same principle as a direct current electric motor with series excitation: the rotor is connected in series with the inductor winding.

This is a particular form of direct current machine which, by virtue of the presence of a stator and a rotor which are wound, can be used also with alternating current without undergoing any modification.

In order to limit the eddy currents that occur systematically in all massive metal regions subjected to alternating magnetic fields, the stator and the rotor of the universal electric motor are preferably laminated.

Despite some advantages, for example the availability of high starting torque, the universal electric motor has the major disadvantage of having a relatively low efficiency, which is variable between 60% and 80% depending on the dimensions of the specific motor.

However, the growing energy needs of today's society and the reduction of natural resources available on planet Earth require increasingly efficient electromechanical systems.

For example, U.S. patent application US2007/146958A1 describes apparatuses, systems and methods that implement a process for supplying unidirectional current to a load, controlling a reverse electromotive force, capturing inductive energy from the load and supplying the captured inductive energy to the load.

The aim of the present invention is to overcome the limitations of the background art described above by devising an electromechanical circuit and a method for controlling a universal electric motor that allow to achieve better effects than can be obtained with known solutions and/or similar effects at a lower cost and with higher performance.

Within the scope of this aim, an object of the present invention is to devise an electromechanical circuit and a method for controlling a universal electric motor that allow to increase the efficiency, and thus the performance, of the universal electric motor.

Another object of the present invention is to devise an electromechanical circuit and a method for controlling a universal electric motor that allow to utilize the operation of the universal electric motor to recover electrical energy.

A further object of the present invention is to devise an electromechanical circuit and a method for controlling a universal electric motor that allow to extend the useful life of the universal electric motor and/or of its battery.

Not least object of the present invention is to provide an electromechanical circuit for the control of a universal electric motor that is highly reliable, relatively simple to provide, and economically competitive if compared with the background art.

This aim, as well as these and other objects that will become better apparent hereinafter, are achieved by an electromechanical circuit for the control of a universal electric motor, comprising:
a battery, of the rechargeable type, configured to supply said electromechanical circuit with a battery voltage;
a primary capacitor having a maximum operating voltage greater than said battery voltage and configured to operate in a first operating mode, in which said primary capacitor stores electrical energy, and a second operating mode, in which said primary capacitor supplies said electrical energy to said battery;
a diode interposed between said battery and said primary capacitor along a first branch of said electromechanical circuit and configured to hinder a flow of electric current from said primary capacitor to said battery along said first branch;
a winding associable with said universal electric motor and interposed between said battery and said primary capacitor along a second branch of said electromechanical circuit; and
a control assembly electrically connected to said winding, to said primary capacitor and to said battery, and configured to perform the following operations:
   a. prevent a circulation of electric current from said battery to said winding through said control assembly;
   b. prevent a transit of electric current between said battery and said primary capacitor through said control assembly;
   c. provide said circulation of electric current, while at the same time continuing to prevent said transit of electric current;
   d. interrupt said circulation of electric current, while continuing at the same time to prevent said transit of electric current, so as to activate said first operating mode of said primary capacitor; and
   e. provide said transit of electric current, so as to activate said second operating mode of said primary capacitor, while continuing at the same time to prevent said circulation of electric current.

The intended aim and objects are also achieved by a method for controlling a universal electric motor by means of an electromechanical circuit comprising:
a battery, of the rechargeable type, configured to supply said electromechanical circuit with a battery voltage;
a primary capacitor having a maximum operating voltage greater than said battery voltage and configured to operate in a first operating mode, in which said primary capacitor stores electrical energy, and a second operating mode, in which said primary capacitor supplies said electrical energy to said battery;
a diode interposed between said battery and said primary capacitor along a first branch of said electromechanical circuit and configured to hinder a flow of electric current from said primary capacitor to said battery along said first branch;
a winding associable with said universal electric motor and interposed between said battery and said primary capacitor along a second branch of said electromechanical circuit; and
a control assembly electrically connected to said winding, to said primary capacitor and to said battery;
said method comprising the steps of:
   S1. preventing a circulation of electric current from said battery to said winding by means of said control assembly;
   S2. preventing a transit of electric current between said battery and said primary capacitor by means of said control assembly;
   S3. providing said circulation of electric current and, at the same time, continuing to prevent said transit of electric current, by means of said control assembly;
   S4. interrupting said circulation of electric current and, at the same time, continuing to prevent said transit of electric current, so as to activate said first operating mode of said primary capacitor, by means of said control assembly; and
   S5. providing said transit of electric current, so as to activate said second operating mode of said primary capacitor, and, at the same time, continuing to prevent said circulation of electric current, by means of said control assembly.

Further characteristics and advantages of the present invention will become better apparent from the description of a preferred but not exclusive embodiment of the electromechanical circuit for controlling a universal electric motor according to the invention, illustrated by way of non-limiting example with the aid of the accompanying drawings, wherein:

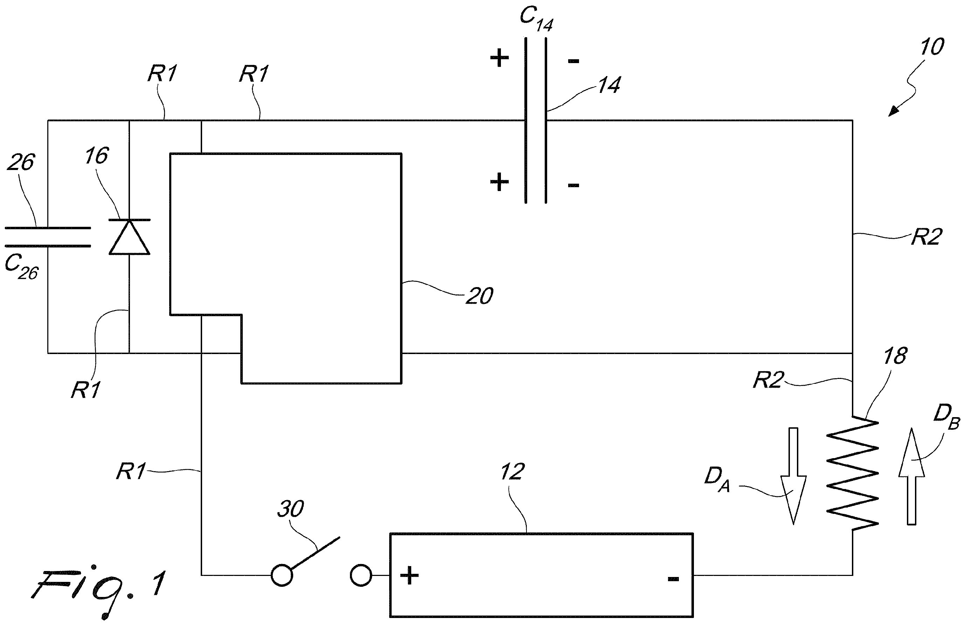

Figure 1 shows an embodiment of the electromechanical circuit for controlling a universal electric motor according to the present invention; and
Figures 2, 3, and 4 show a sequence of operations of a preferred embodiment of the electromechanical circuit for controlling a universal electric motor shown in Figure 1.

With reference to the cited figures, the electromechanical circuit for controlling a universal electric motor according to the present invention, generally designated by the reference numeral 10, comprises a battery 12, an on/off switch 30 for the electromechanical circuit 10, a primary capacitor 14, a diode 16, and a winding 18 for a universal electric motor.

The diode 16 is interposed between the battery 12 and the primary capacitor 14 along a first branch R1 of the electromechanical circuit 10. The winding 18 is interposed between the battery 12 and the primary capacitor 14 along a second branch R2 of the electromechanical circuit 10.

Furthermore, the electromechanical circuit 10 comprises a control assembly 20 electrically connected to the winding 18, to the primary capacitor 14 and to the battery 12.

The battery 12 is of the rechargeable type and is configured to supply the electromechanical circuit 10 with a battery voltage V₁₂.

The battery 12 can be any rechargeable battery adapted to store and supply electrical voltage.

The on/off switch 30 is configured to provide (or realize) and prevent an electrical connection of the battery 12 to the rest of the electromechanical circuit 10. In other words, the on/off switch 30 is configured to allow a delivery of the battery voltage V₁₂ to the rest of the electromechanical circuit 10. Consequently, the on/off switch 30 is configured to turn the electromechanical circuit 10 on and off.

As shown, the battery 12 and the on/off switch 30 can be two separate elements of the electromechanical circuit 10. As an alternative, the on/off switch 30 can be comprised in the battery 12.

The figures cited above show the on/off switch 30 in a position along the first branch R1. However, the specific placement of the on/off switch 30 according to the cited figures is non-limiting for the invention, since it is also conceivable to place the on/off switch 30 in other positions of the electromechanical circuit 10. For example, in some variations the on/off switch 30 can be placed along the second branch R2.

The on/off switch 30 can be controlled manually, by an operator, or automatically, by means of an appropriate control system.

The primary capacitor 14 has a maximum operating voltage higher than the battery voltage V₁₂.

Advantageously, the primary capacitor 14 is of the high-capacity type. Preferably, the maximum operating voltage of the primary capacitor 14 is at least 400 V higher than the battery voltage V₁₂.

The primary capacitor 14 is configured to operate in a first operating mode, in which the primary capacitor 14 stores electrical energy, and a second operating mode, in which the primary capacitor 14 supplies electrical energy to the battery 12.

Obviously, at a same instant in time, the primary capacitor 14 can operate according to only one of the two operating modes described above. Therefore, the primary capacitor 14 is configured to operate according to a first operating mode, in which the primary capacitor 14 stores electrical energy, and a second operating mode.

As explained in greater detail hereinafter, both the first operating mode and the second operating mode of the primary capacitor 14 can be activated by the control assembly 20.

The diode 16 is configured to hinder a flow of electric current from the primary capacitor 14 to the battery 12 along the first branch R1.

Preferably, the diode 16 is a high-potential diode with a reverse voltage comprised within a range of, for example, 1500-1600 V. For reverse voltages lower than this range, the diode is capable of preventing electric current from flowing from the primary capacitor 14 to the battery 12 along the first branch R1.

The winding 18 is associable with or comprised within the universal electric motor. Advantageously, the winding 18 is or can be wound onto the stator of the universal electric motor.

The control assembly 20 is configured to perform the following operations:
a. prevent a circulation of electric current from the battery 12 to the winding 18 through the control assembly 20;
b. prevent a transit of electric current between the battery 12 and the primary capacitor 14 (i.e., from the battery 12 to the primary capacitor 14, or from the primary capacitor 14 to the battery 12) via the control assembly 20;
c. provide (or realize) said circulation of electric current, while continuing at the same time to prevent said transit of electric current;
d. interrupt said circulation of electric current, while continuing at the same time to prevent said transit of electric current, so as to activate the first operating mode of the primary capacitor 14; and
e. provide (or realize) said transit of electric current, so as to activate the second operating mode of the primary capacitor 14, while continuing at the same time to prevent said circulation of electric current.

It should be noted that, in the present description, the expression "circulation of electric current" specifically indicates a flow of electric current from the battery 12 to the winding 18, while the expression "transit of electric current" specifically indicates a flow of electric current from the battery 12 to the primary capacitor 14 (or vice versa).

The activation of the control assembly 20, i.e., the transition from one operation to the next, can occur at predetermined frequencies, for example, in a range variable between 50 and 300 Hz.

In other words, the control assembly 20 is configured to be crossed by electric current directed from the battery 12 to the winding 18 during said operation c. (and optionally during said operation b.), but not during said operations a., d., and e. Moreover, in said operation b., the control assembly 20 acts as a barrier for electric current in both directions of a path joining the battery 12 to the primary capacitor 14 via the control assembly 20.

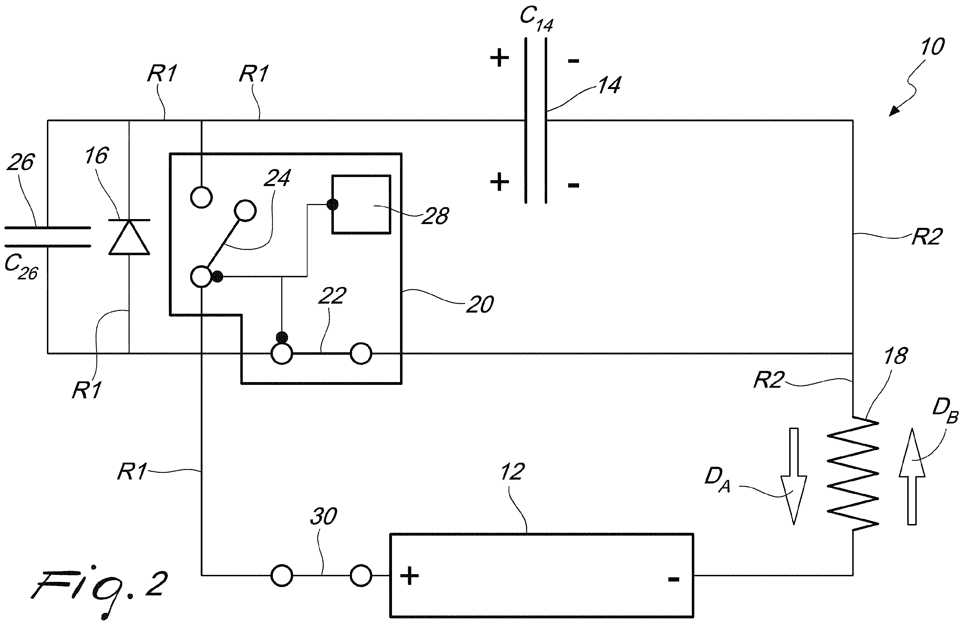

As shown by any one of Figures 2, 3 and 4, the control assembly 20 can comprise a control switch 22 for the universal electric motor and a discharge switch 24 for the primary capacitor 14.

The control switch 22 is configured to selectively provide (or realize) and prevent said circulation of electric current from the battery 12 to the winding 18.

In other words, a closure of the control switch 22 allows electric current to circulate from the battery 12 to the winding 18 via the control assembly 20. Vice versa, this circulation of electric current is prevented by an opening of the control switch 22.

Accordingly, the control switch 22 is configured to control a respective activation or deactivation of an electrical connection in series between the battery 12, the control assembly 20, and the winding 18.

The discharge switch 24 is configured to selectively provide (or realize) and prevent said transit of electric current between the battery 12 and the primary capacitor 14.

In other words, a closure of the discharge switch 24 allows electric current to transit between the battery 12 and the primary capacitor 14 (i.e., as mentioned, from the battery 12 to the primary capacitor 14, or from the primary capacitor 14 to the battery 12) via the control assembly 20. By contrast, this transit of electric current is prevented by an opening of the discharge switch 24.

Accordingly, the discharge switch 24 is configured to control a respective activation or deactivation of a series electrical connection between the primary capacitor 14, the control assembly 20 and the battery 12.

Advantageously, the control switch 22 and the discharge switch 24 are each a single-pole single-throw (SPST in acronym) switch. Preferably, the control switch 22 and/or the discharge switch 24 are point contact switches or sliding contact switches. These types of switches are preferred because of their greater withstand capability with respect to the high voltages of the electromechanical circuit 10.

As an alternative, the control switch 22 and the discharge switch 24 are each an electronic switch, preferably a transistor, more preferably a metal oxide semiconductor field-effect transistor (MOSFET).

The control switch 22 and the discharge switch 24 can be configured to be opened manually or automatically. The control switch 22 and the discharge switch 24 can be configured to be opened asynchronously or synchronously. However, when the battery 12 supplies the electromechanical circuit 10, the control switch 22 and the discharge switch 24 must not be closed at the same time.

In addition, when the control switch 22 and the discharge switch 24 are both open, the diode 16 allows electric current to flow from the battery 12 to the primary capacitor 14 along the first branch R1.

Furthermore, when the control switch 22 is open, the presence of the diode 16 along the first branch R1 and a closure of the discharge switch 24 allow the activation of the second operating mode of the primary capacitor 14.

In Figures 2, 3, and 4, the control switch 22 and the discharge switch 24 are shown as two separate elements of the control assembly 20.

In another embodiment, equivalent to the one shown in the cited figures, the control assembly 20 may comprise a single-pole double-throw (SPDT in acronym) switch. In other words, the control switch 22 and the discharge switch 24 are conveniently replaceable by a single SPDT switch. The use of a single SPDT switch allows a simplification of the electromechanical circuit 10.

The SPDT switch is configured to be moved between a first position, in which the SPDT switch provides said circulation of electric current and prevents said transit of electric current, and a second position, in which the SPDT switch provides said transit of electric current and prevents said circulation of electric current.

In the second position, the SPDT switch activates the second operating mode of the primary capacitor 14. In other words, when the SPDT switch is in the second position, the presence of the diode 16 along the first branch R1 allows the activation of the second operating mode of the capacitor.

Advantageously, the control assembly 20 comprises an electronic control unit 28 configured to perform said operations a., b., c., d., and e. at predefined time instants. In other words, the electronic control unit 28 is configured to set the control assembly 10 according to a specific operating state.

Where present, the electronic control unit 28 is adapted to automatically control, according to a predefined sequence, an actuation of the at least one switch comprised in the control assembly 20, preferably via an actuation motor not shown in the figures.

The actuation of the at least one switch of the control assembly 20 can take place at predetermined frequencies, for example, in a range variable between 50 and 300 Hz.

The presence of the electronic control unit 28 within the control assembly 10 is not essential, since the beneficial effects of the present invention can also be obtained with a manual actuation of the control assembly 20. Nevertheless, where present, the electronic control unit 28 entails additional benefits in terms of automation, repeatability, and precision of the electromechanical circuit 10 according to the invention.

Advantageously, the electromechanical circuit 10 may further comprise a secondary capacitor 26 which is electrically connected in parallel with the diode 16.

A capacitance C₂₆ of the secondary capacitor 26 is lower than a capacitance C₁₄ of the primary capacitor 14. Preferably, the capacitance C₂₆ of the secondary capacitor 26 is at most 10% of the capacitance C₁₄ of the primary capacitor 14. More preferably, the capacitance C₂₆ is about 2% of the capacitance C₁₄.

Optionally, the secondary capacitor 26 can be electrically connected in series with a resistor, thus forming an RC-type suppressor.

When the control assembly 20 provides said current circulation from the battery 12 to the winding 18, the secondary capacitor 26 is reversecharged by the primary capacitor 14.

Where present, the secondary capacitor 26 allows a significant attenuation of a possible electrical transient, commonly called sparking, due to the closing of at least one switch present in the electromechanical circuit 10. Accordingly, the possible presence of the secondary capacitor 26 leads to an electromechanical circuit 10 that is more robust and durable.

The present invention also relates to a universal electric motor comprising the electromechanical circuit 10 described above.

A method for controlling a universal electric motor, i.e., the operation of the electromechanical circuit 10 described above, comprises the steps described hereinafter.

Optionally, a first step S0 entails turning on the electromechanical circuit 10 by means of the on/off switch 30.

In some variations of the present method, the first step S0 is performed in a condition in which the primary capacitor 14 is at least partially discharged. In this context, the primary capacitor 14 is to be understood as "at least partially discharged" when a voltage V₁₄ across the primary capacitor 14 is lower than the battery voltage V₁₂. If a modulus of the voltage V₁₄ across the primary capacitor 14 is substantially zero, the primary capacitor 14 is discharged. In other variations of the present method, the first step S0 is performed starting from a condition in which the modulus of the voltage V₁₄ already equals a modulus of the battery voltage V₁₂.

If the primary capacitor 14 is (at least partially) discharged, the first step S0 causes the capacitor to be charged to a value equal to the battery voltage V₁₂. In particular, the connection of the battery 12 to the rest of the electromechanical circuit 10 allows electric current to flow from the battery 12 to the primary capacitor 14 through the diode 16, until a state of balance is reached between the voltage V₁₄ across the primary capacitor 14 and the battery voltage V₁₂.

In a second step S1 of the method, the control assembly 20 prevents electric current from flowing from the battery 12 to the winding 18 through the control assembly 20, i.e., it prevents said circulation of electric current.

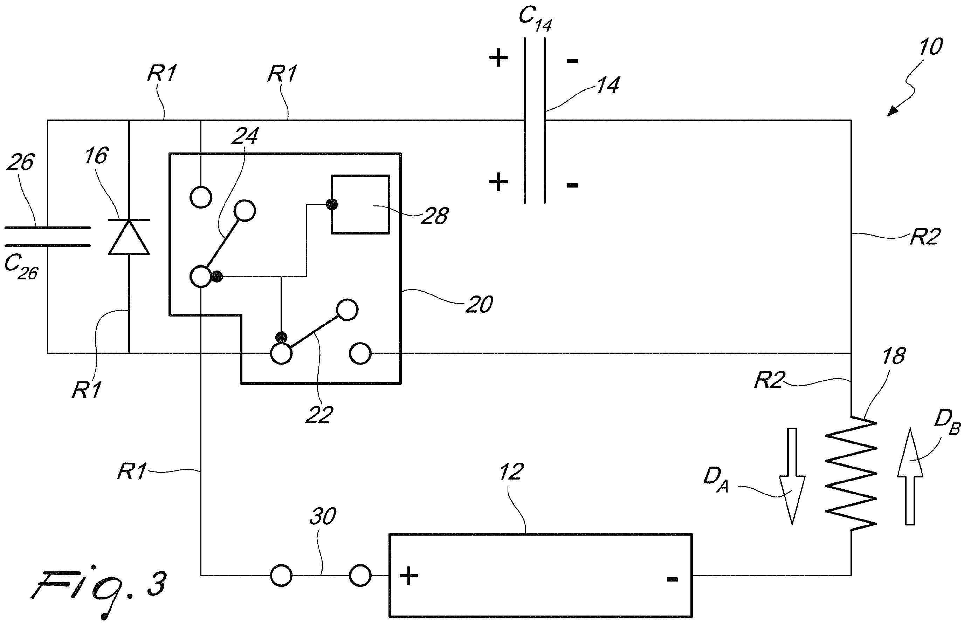

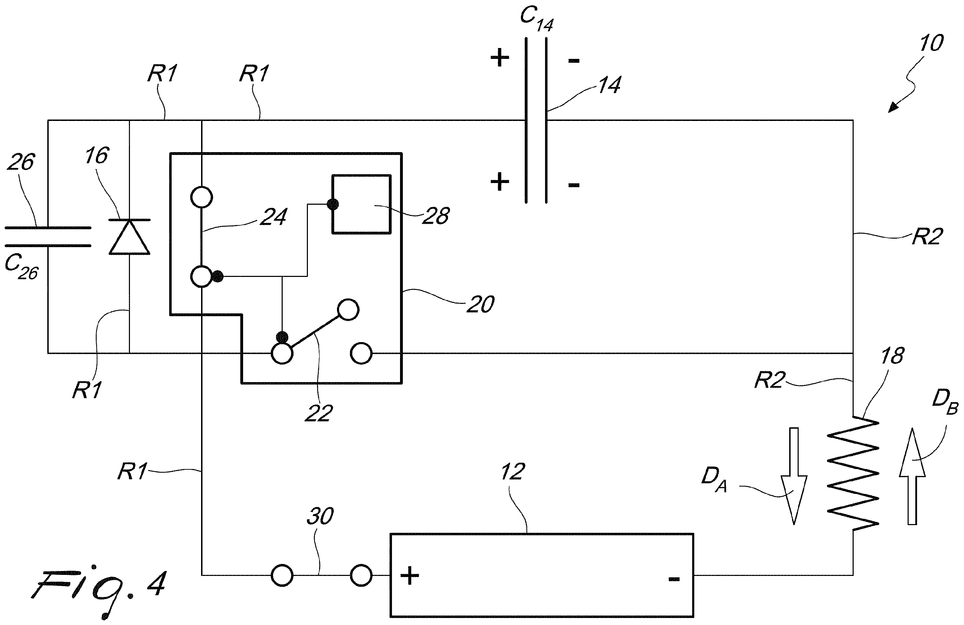

For example, with reference to the preferred embodiment shown in Figures 2, 3 and 4, the second step S1 entails the opening of the control switch 22. An open position of the control switch 22 can be seen in each of Figures 3 and 4.

The second step S1 can be performed in an inactive situation, in which the universal electric motor is at rest, or in a moving situation, in which the universal electric motor is rotating.

Preferably, the second step S1 is performed after the first step S0 (if present). As an alternative, the second step S1 can be performed before, or at the same time as, the first step S0 (if present).

In a third step S2 of the method, the control assembly 20 prevents electric current from flowing between the battery 12 and the primary capacitor 14 by means of the control assembly 20, i.e., it prevents said transit of electric current.

For example, with reference to the preferred embodiment shown in Figures 2, 3 and 4, the third step S2 entails an opening of the discharge switch 24. An open position of the discharge switch 24 can be seen in each of Figures 2 and 3.

Preferably, the third step S2 is performed after the second step S1. As an alternative, the third step S2 can be performed before, or at the same time as, the second step S1.

In a fourth step S3 of the method, the control assembly 20 provides (or realizes) the circulation of electric current from the battery 12 to the winding 18 by means of the control assembly 20. At the same time, in the fourth step S3, the control assembly 20 continues to prevent the transit of electric current between the battery 12 and the primary capacitor 14 by means of the control assembly 20.

In other words, in the fourth step S3, the control assembly 20 is set to provide said circulation of electric current and, at the same time, to continue to prevent said transit of electric current.

The provision (or realization) of said circulation of electric current entails that in the fourth step S3 the electromechanical circuit 10 is on.

For example, with particular reference to Figure 2, the fourth step S3 entails a closure of the control switch 22. In the fourth step S3, the closure of the control switch 22 is performed while the discharge switch 24 is open.

Accordingly, the fourth step S3 is performed after the third step S2.

Due to the fourth step S3, electric current flows through the winding 18 along a direction which, in the cited figures, is indicated as D_{A}.

If the fourth step S3 is performed while the universal electric motor is at rest, the fourth step S3 causes an actuation of the rotor of the universal electric motor, to which a mechanical load can be connected.

In a fifth step S4 of the method, the control assembly 20 interrupts the circulation of electric current from the battery 12 to the winding 18 by means of the control assembly 20. At the same time, in the fifth step S4, the control assembly 20 continues to prevent the transit of electric current between the battery 12 and the primary capacitor 14 by means of the control assembly 20.

In other words, in the fifth step S4 the control assembly 20 is set to interrupt said circulation of electric current and, at the same time, to continue to prevent said transit of electric current.

For example, with particular reference to Figure 3, the fifth step S4 entails that the control switch 22 and the discharge switch 24 are both open.

As explained in greater detail hereinafter, the fifth step S4 entails an activation of the first operating mode of the primary capacitor 14.

Specifically, the interruption of the circulation of electric current from the battery 12 to the winding 18 by means of the control assembly 20 causes a variation of the magnetic field in the electromechanical circuit 10. In accordance with Lenz's law, said variation entails the generation of an induced electric field within the electromechanical circuit 10. An induced electric current is associated with said electric field, and its voltage - referenced hereinafter as "Lenz voltage" - has a sign that matches the sign of the battery voltage V₁₂. The Lenz voltage is directed along a direction which, in the cited figures, is referenced as D_{A}.

By passing through the winding 18, the induced current keeps the universal electric motor, whose direction of rotation is inherently independent of a supply polarity, in a state of rotation.

Moreover, the onset of the Lenz voltage causes a voltage increase within the second branch R2. The extent of this increase varies according to the design specifications of the electromechanical circuit 10. In some variations, this increase can be quantified between 300 and 400 V.

Said increase is stored by the primary capacitor 14, which, by virtue of the connection to the diode 16 and of its own maximum operating voltage, is able to store electrical energy. Accordingly, the fifth step S4 allows to activate the first operating mode of the primary capacitor 14.

In greater detail, the fifth step S4 entails an increase in the voltage V₁₄ of the primary capacitor 14, which increases to a value substantially equal to the sum of the moduli of the battery voltage V₁₂ and of the Lenz voltage.

By virtue of the presence of the diode 16 on the first branch R1, the primary capacitor 14 is able to maintain the stored electrical energy in the form of voltage, thus remaining in the first operating mode.

In a sixth step S5 of the method, the control assembly 20 provides the transit of electric current between the battery 12 and the primary capacitor 14 by means of the control assembly 20. At the same time, in the sixth step S5, the control assembly 20 continues to prevent the circulation of electric current from the battery 12 to the winding 18 through the control assembly 20.

In other words, in the sixth step S5 the control assembly 20 is set to provide said transit of electric current and, at the same time, to continue to prevent said circulation of electric current.

For example, with particular reference to Figure 4, the sixth step S5 entails closing the discharge switch 24 and, at the same time, maintaining an open position of the control switch 22.

As explained in greater detail hereinafter, the sixth step S5 entails an activation of the second operating mode of the primary capacitor 14.

Specifically, in the sixth step S5 the deactivation of the first operating mode entails the activation of an electrical path which leads to the battery 12 from the primary capacitor 14 by means of the control assembly 20. Activation of this electrical path allows electric current to bypass the obstacle constituted by the presence of the diode 16 along the first branch R1.

Since the primary capacitor 14 is electrically connected to the battery 12 also by means of the second branch R2, the activation of said electrical path allows the primary capacitor 14 to discharge the stored voltage into the battery 12. Therefore, the sixth step S5 allows the primary capacitor 14 to supply electrical energy to the battery 12, i.e., to activate the second operating mode of the primary capacitor 14.

By discharging the stored voltage, the primary capacitor 14 charges the battery 12. As a result, the life of the battery 12 is extended.

As a result of the discharge of the accumulated voltage, the modulus of the voltage V₁₄ across the primary capacitor 14 again equals the modulus of the battery voltage V₁₂.

Moreover, during the discharge of the stored voltage, a flow of electric current flows through the winding 18 from the primary capacitor 14 to the battery 12, along a direction indicated as D_{B} in the cited figures. The passage of this flow through the winding 18 in the direction D_{B} has no influence on a direction of rotation of the universal electric motor, which therefore remains unchanged. In fact, in a universal electric motor the direction of rotation does not change when the supply polarity is reversed.

As a whole, the electromechanical circuit 10 and the steps of the method that have been described above therefore entail a more efficient management of the electrical energy generated during the passive supply steps induced by the electromechanical circuit, i.e., during the steps in which there is no transfer of current from an external supply to the stator and rotor windings of the universal electric motor.

As a result, the electromechanical circuit 10 and the method described above entail an increase in the efficiency of the universal electric motor.

The beneficial effects of the present invention can be advantageously amplified by configuring the control assembly 20 to perform said operations a., b., c., d., and e. (i.e., said steps S1, S2, S3, S4, and S5) in a cyclic manner.

A further increase in efficiency can be achieved by configuring the control assembly 20 to activate one or more of said steps S1 to S5 in an automatic and time-controlled manner. The transition from one step to the other can be controlled automatically by the electronic control unit 28, preferably by means of a timed sequence of commands to the actuation motor.

In practice it has been found that the present invention fully achieves the intended aim and purposes. In particular, it has been shown that the electromechanical circuit and the method for controlling a universal electric motor thus devised allow to overcome the qualitative limitations of the background art, since they allow to achieve better effects than can be obtained with known solutions and/or similar effects at lower cost and with higher performance.

One advantage of the electromechanical circuit and of the method for controlling a universal electric motor according to the present invention is that they allow to increase considerably the efficiency, and thus the performance, of the universal electric motor.

Another advantage of the electromechanical circuit and of the method for controlling a universal electric motor according to the present invention is that they allow to utilize the operation of the universal electric motor to recover electrical energy.

A further advantage of the electromechanical circuit and of the method for controlling a universal electric motor according to the present invention resides in that they allow to extend the service life of the universal electric motor and/or of its battery.

The invention thus conceived is susceptible of numerous modifications and variations, all of which are within the scope of the accompanying claims.

It is understood that although terms such as "first," "second," "third," etc. are used herein to describe various elements, components or steps, these elements, components and/or steps should not be limited by these terms. These terms are used only to distinguish one element, component or step from another element, component or step. Therefore, except where otherwise indicated, a "first" element, component or step might also be termed a "second" element, component or step, respectively, without departing from the teachings of the present description.

Except where otherwise indicated, the various embodiments described above may be combined to provide additional and/or alternative embodiments. Moreover, the present description covers combinations of variations and preferred embodiments that are not described explicitly.

All the details may furthermore be replaced with other technically equivalent elements.

In practice, the materials used, so long as they are compatible with the specific use, as well as the contingent shapes and dimensions, may be any according to the requirements and the state of the art.

To conclude, the scope of the protection of the claims must not be limited by the illustrations or by the preferred embodiments given in the description by way of example, but rather the claims must comprise all the characteristics of patentable novelty that reside in the present invention, including all the characteristics that would be treated as equivalents by the person skilled in the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An electromechanical circuit (10) for controlling a universal electric motor, comprising:
a battery (12), of the rechargeable type, configured to supply said electromechanical circuit (10) with a battery voltage (V₁₂);
a primary capacitor (14) having a maximum operating voltage greater than said battery voltage (V₁₂) and configured to operate in a first operating mode, in which said primary capacitor (14) stores electrical energy, and a second operating mode, in which said primary capacitor (14) supplies said electrical energy to said battery (12);
a diode (16) interposed between said battery (12) and said primary capacitor (14) along a first branch (R1) of said electromechanical circuit (10) and configured to hinder a flow of electric current from said primary capacitor (14) to said battery (12) along said first branch (R1);
a winding (18) associable with said universal electric motor and interposed between said battery (12) and said primary capacitor (14) along a second branch (R2) of said electromechanical circuit (10); and
a control assembly (20) electrically connected to said winding (18), to said primary capacitor (14) and to said battery (12), and configured to perform the following operations:
a. prevent a circulation of electric current from said battery (12) to said winding (18) through said control assembly (20);
b. prevent a transit of electric current between said battery (12) and said primary capacitor (14) through said control assembly (20);
c. provide said circulation of electric current, while at the same time continuing to prevent said transit of electric current;
d. interrupt said circulation of electric current, while continuing at the same time to prevent said transit of electric current, so as to activate said first operating mode of said primary capacitor (14); and
e. provide said transit of electric current, so as to activate said second operating mode of said primary capacitor (14), while continuing at the same time to prevent said circulation of electric current.

2. The electromechanical circuit (10) according to claim 1, wherein said control assembly (20) comprises a control switch (22) configured to provide and prevent said circulation of electric current selectively, and a discharge switch (24) configured to provide and prevent said transit of electric current selectively.

3. The electromechanical circuit (10) according to claim 2, wherein said control switch (22) and said discharge switch (24) are each a single-pole single-throw switch, SPST.

4. The electromechanical circuit (10) according to claim 3, wherein said control switch (22) and said discharge switch (24) are each a point contact or sliding contact switch.

5. The electromechanical circuit (10) according to claim 2, wherein said control switch (22) and said discharge switch (24) are each an electronic switch, preferably a transistor, more preferably a field-effect metal oxide semiconductor transistor, MOSFET.

6. The electromechanical circuit (10) according to claim 1, wherein said control assembly (20) comprises a single-pole, double-throw switch, SPDT, configured to be moved between a first position, wherein said SPDT switch provides said circulation of electric current and prevents said transit of electric current, and a second position, wherein said SPDT switch provides said transit of electric current and prevents said circulation of electric current.

7. The electromechanical circuit (10) according to any one of the preceding claims, wherein said control assembly (20) further comprises an electronic control unit (28) configured to perform sequentially said operations a., b., c., d., and e. at predetermined time instants.

8. The electromechanical circuit (10) according to any one of the preceding claims, wherein said control assembly (20) is further configured to perform sequentially said operations a., b., c., d., and e. in a cyclic manner.

9. The electromechanical circuit (10) according to any one of the preceding claims, further comprising an on/off switch (30) configured to turn on and off said electromechanical circuit (10).

10. The electromechanical circuit (10) according to any one of the preceding claims, further comprising a secondary capacitor (26) electrically connected in parallel with said diode (16), wherein a capacitance (C₂₆) of said secondary capacitor (26) is lower than a capacitance (C₁₄) of said primary capacitor (14).

11. A universal electric motor comprising said electromechanical circuit (10) according to any one of the preceding claims.

12. A method for controlling a universal electric motor by means of an electromechanical circuit (10) comprising:
a battery (12), of the rechargeable type, configured to supply said electromechanical circuit (10) with a battery voltage (V₁₂);
a primary capacitor (14) having a maximum operating voltage higher than said battery voltage (V₁₂) and configured to operate in a first operating mode, in which said primary capacitor (14) stores electrical energy, and a second operating mode, in which said primary capacitor (14) supplies said electrical energy to said battery (12);
a diode (16) interposed between said battery (12) and said primary capacitor (14) along a first branch (R1) of said electromechanical circuit (10) and configured to hinder a flow of electric current from said primary capacitor (14) to said battery (12) along said first branch (R1);
a winding (18) associable with said universal electric motor and interposed between said battery (12) and said primary capacitor (14) along a second branch (R2) of said electromechanical circuit (10); and
a control assembly (20) electrically connected to said winding (18), to said primary capacitor (14) and to said battery (12);
said method comprising the steps of:
S1. preventing a circulation of electric current from said battery (12) to said winding (18) by means of said control assembly (20);
S2. preventing a transit of electric current between said battery (12) and said primary capacitor (14) by means of said control assembly (20);
S3. providing said circulation of electric current and, at the same time, continuing to prevent said transit of electric current, by means of said control assembly (20);
S4. interrupting said circulation of electric current and, at the same time, continuing to prevent said transit of electric current, so as to activate said first operating mode of said primary capacitor (14), by means of said control assembly (20); and
S5. providing said transit of electric current, so as to activate said second operating mode of said primary capacitor (14), and, at the same time, continuing to prevent said circulation of electric current, by means of said control assembly (20).

13. The method according to claim 12, further comprising the step of:
S0. turning on said electromechanical circuit (10), by means of an on/off switch (30) comprised in said electromechanical circuit (10).
